# EUROPÄISCHE PATENTSCHRIFT

(11) **EP 0 761 580 B1**
(45) Veröffentlichungstag und Bekanntmachung des Hinweises auf die Patenterteilung: **03.02.1999**
(21) Anmeldenummer: 96113138.0
(22) Anmeldetag: 16.08.1996
(51) Int. Cl.: B65G 69/28

(54) **Überfahrbrücke für Rampen**
Traversing bridge for ramps
Passerelle de transbordement pour rampes

(30) Priorität: 11.09.1995 DE 19533530
(43) Veröffentlichungstag der Anmeldung: 12.03.1997
(73) Patentinhaber: Alten, Kurt, D-30967 Wennigsen (DE)
(72) Erfinder: Alten, Kurt, D-30967 Wennigsen (DE)
(74) Vertreter: Depmeyer, Lothar

(56) Entgegenhaltungen:
- DE-A- 3 407 165
- DE-U- 8 912 968

## Beschreibung

Die Erfindung betrifft eine Überfahrbrücke für Rampen mit einer am rampenseitigen Ende verschwenkbar gelagerten Brückenplatte und einer am freien Ende dieser Brückenplatte verschwenkbar angelenkten Verlängerung zum Auflegen auf eine zu be- bzw. entladende Plattform, wobei sich die Verlängerung in der etwa senkrecht nach unten geklappten Stellung ( Ruhestellung ) bei nicht in Betrieb befindlicher Überfahrbrücke auf einem festen Widerlager abstützt und ein- oder beidseitig mit zumindest einem klappbaren Abschnitt zur Veränderung der wirksamen Breite der Verlängerung versehen ist und zwischen den Abschnitten und dem Mittelteil ein lösbarer Mitnehmer wirksam ist, mit dem die Abschnitte von ihrer Ruhestellung aus in die Wirkstellung verschwenkbar sind.

Bei den bekannten Überfahrbrücken dieser Ausbildung (DE-C-3407165) stützt sich die Brückenplatte in der Ruhestellung über das Mittelteil auf dem Widerlager ab. Dazu sind innerhalb der zur Aufnahme der Überfahrbrücke dienenden Ausnehmung der Rampe Traversen oder von unten hochgeführte Widerlager erforderlich, um das Mittelteil zum Abstützen der Brückenplatte benutzen zu können. Es versteht sich, dass diese Widerlager bzw. Traversen besondere Masssnahmen und Aufwendungen erfordern. Zudem können bei den bekannten Brücken die Abschnitte nicht in eine etwa senkrechte Ruhestellung geklappt werden, da sie beim Verschwenken in die Ruhelage durch einen Anschlag daran gehindert werden.

Der Erfindung liegt die Aufgabe zugrunde, die eingangs erwähnten Überfahrbrücken so auszubilden, dass die vorgenannten Traversen und Widerlager überflüssig werden und demgemäss auch die Brückenplatte mit nach unten geklappten Abschnitten vergleichsweise tief in die Rampenausnehmung eintauchen kann.

Zur Lösung dieser Aufgabe ist erfindungsgemäss vorgesehen, dass sich die Brückenplatte ein oder beidseitig über einen bzw. zwei Abschnitte auf dem Widerlager abstützt und dass die Abschnitte und das Mittelteil derart begrenzt gegeneinander verschwenkbar miteinander verbunden sind, dass die Abschnitte von der etwa waagerechten Wirkstellung des Mittelteiles aus nur so weit nach unten schwenkbar sind, dass sie beim Verschwenken der Brückenplatte nach unten an ihrem Widerlager vorbeigeführt werden und somit durch Schwenken nach unten vor Erreichen ihrer Stützstellung auffangbar sind.

Demgemäss erfolgt die Abstützung der in Ruhe befindlichen Brückenplatte nicht über das mittig gelegene Mittelteil der Verlängerung, sondern vorzugsweise beidseitig über die an den Rändern der Überfahrbrücke befindlichen Abschnitte, und zwar so, dass bei zwei Abschnitten an jeder Seite der Brückenplatte jeweils der seitlich aussen gelegene Abschnitt die Abstützung übernimmt. Im übrigen folgen die Abschnitte den Bewegungen dem durch einen Arbeitszylinder angetriebenen Mittelteil der Verlängerung, was insb. auf die Klappbewegung von der etwa senkrechten Ruhestellung in die etwa waagerechte Wirkstellung zutrifft. Treffen jedoch die Abschnitte dabei auf ein Hindernis bzw. eine Bordwand des Fahrzeuges od. dgl. oder sollen die Abschnitte nach unten geklappt werden, wenn das Mittelteil seine etwa waagerechte Stellung erreicht hat, so wird der Mitnehmer gelöst, und die Abschnitte können dann unabhängige Bewegungen nach unten vollziehen, die jedoch nicht beliebig, sondern nur so weit durchführbar sind, dass die Schwenkbewegung vor den Widerlagern für die Abschnitte endet. Die Abschnitte können also unter diesen Bedingungen nicht in die Wirk- bzw. Stützstellung gelangen. Damit ist sichergestellt, dass die Abschnitte nicht ungewollt aufsetzen bzw. auf ein Widerlager stossen, sollte die Brückenplatte mit dem ausgeklappten Mittelteil tief in die Ausnehmung der Rampe eintauchen müssen.

Die Mittel zur begrenzten Verschwenkbarkeit der Abschnitte gegenüber dem Mittelteil können von der lösbaren Verbindung zwischen dem Mittelteil und den Abschnitten getrennt sein, vorzugsweise sind jedoch die dazu erforderlichen technischen Mittel wirkungsmässig verbunden. So kann an einem Konstruktionsteil ( Mittelteil oder Abschnitt ) ein federnd nachgiebiger, quer zur Brücke gerichterter Bolzen vorgesehen sein, der zur Mitnahme der Abschnitte in eine Vertiefung eingreift, zum Lösen der Verbindung aber die Vertiefung verlassen kann, in diesem Falle aber entlang einer gebogenen Nut geführt ist, deren Länge dem gewünschten Schwenkweg der Abschnitte in Bezug auf das Mittelteil entspricht. Damit sind eine lösbare Mitnahme und die gewünschte begrenzte relative Verschwenkbarkeit sichergestellt.

Weitere Einzelheiten der Erfindung werden anhand der Zeichnung erläutert, in der ein Ausführungsbeispiel der Erfindung dargestellt ist. Es zeigen :
Fig. 1 eine Überfahrbrücke für Rampen in der Seitenansicht mit einer sich auf einer Plattform abstützenden, in der Wirkstellung befindlichen Verlängerung bzw. dem Mittelteil davon,
Fig. 2 eine Teildraufsicht auf die Brücke gemäss Fig. 1,
Fig. 3 eine Teilstirnansicht der Brücke gemäss Fig. 1, jedoch in der Ruhestellung,
Fig. 4 einen senkrechten Schnitt nach der Linie IV - IV von Fig. 2 durch den vorne gelegenen Teil der Überfahrbrücke in vergrösserter Darstellung, und zwar mit einem ausgeklappten seitlichen Abschnitt,
Fig. 5 eine Verbindungstelle zwischen dem Abschnitt gemäss Fig. 4 und dem Mittelteil der Verlängerung,
Fig. 6 ebenfalls einen Schnitt nach der Linie IV - IV von Fig. 1, jedoch mit einem eingeklappten Abschnitt und
Fig. 7 die Verbindungsstelle gemäss Fig. 5, jedoch der Stellung des Abschnittes gemäss Fig. 6 entsprechend.

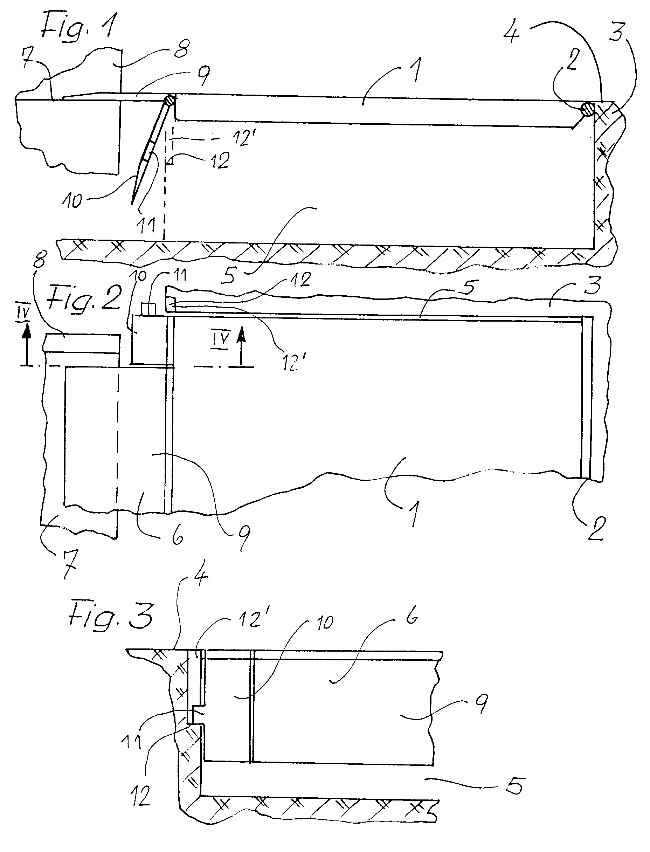

Eine Brückenplatte 1 ist an ihrem rampenseitigen Ende um eine waagerechte Achse 2 an der Rampe 3 verschwenkbar gelagert, deren Oberfläche mit 4 bezeichnet ist. Die Brückenplatte 1 befindet sich in einer Ausnehmung 5. Deren Grundriss entspricht dabei praktisch dem Grundriss der Brückenplatte 1. Am freien Ende der Brückenplatte 1 befindet sich eine klappbare Verlängerung 6 zur Auflage auf der zu be- bzw. entladenden Plattform 7 eines Fahrzeuges, die seitlich durch senkrechte Bordwände 8 begrenzt ist. Wie aus Fig. 2 erkennbar ist, kann die lichte Breite der Plattform 7 kleiner als die Breite der Brückenplatte 1 sein.

Der Brückenplatte 1 ist ein nicht dargestellter Hubzylinder zugeordnet, um die Brückenplatte 1 verschwenken zu können. In der Regel ist auch für die klappbare Verlängerung 6 ein Arbeitszylinder vorgesehen, mit dem die Verschwenkung durchgeführt werden kann. Darüber hinaus stützt sich die Brückenplatte 1 in der Betriebsstellung gemäss Fig. 1 auf der Plattform 7 ab; sie folgt somit Höhenänderungen der Plattform 7.

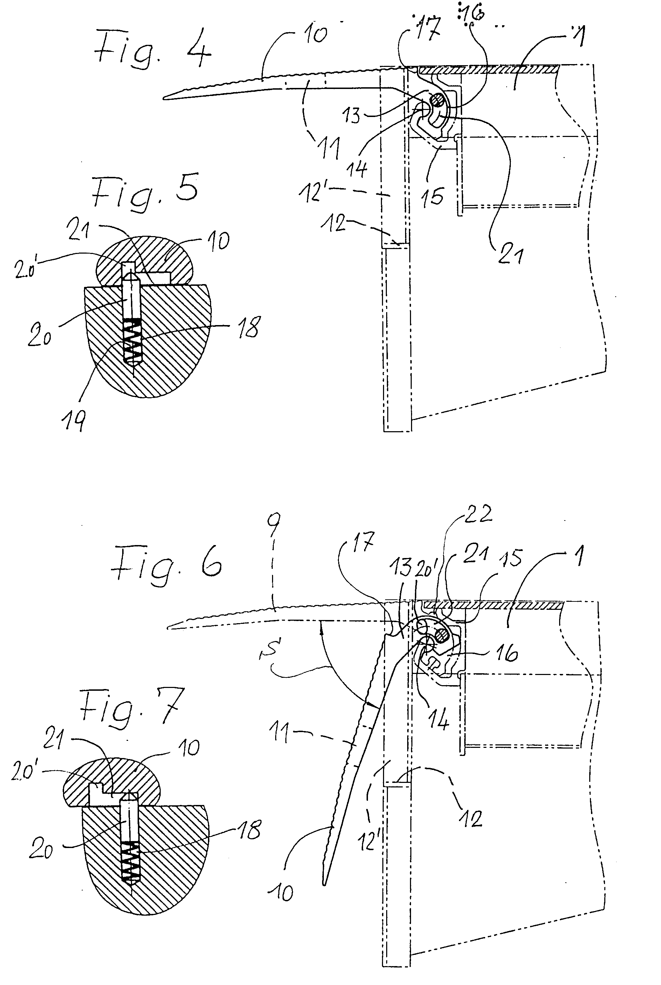

Um die Überfahrbrücke auch für Plattformen 7 kleinerer Breite benutzen zu können, ist die Verlängerung 6 unterteilt. Sie weist ein Mittelteil 9 und zu beiden Seiten im Randbereich der Überfahrbrücke schmale, segmentartige Abschnitte 10 auf, die über die Anordnungen gemäss Fig. 5 und 7 mit dem Mittelteil 9 verbunden sind. Diese weisen auch etwa auf halber Länge ohrenartig seitlich abstehende Vorsprünge 11 auf, die bei etwa senkrecht nach unten geklappter Verlängerung 6 auf einem Widerlager 12 der Rampe 3 aufliegen, und zwar so, dass diese Vorsprünge 11 der ausschliesslichen Abstützung der Brückenplatte 1 am vorderen Ende dienen können, wenn sie sich in der Ruhestellung befindet bzw. mit der Oberfläche 4 bündig ist. Demgemäss ist das Mittelteil 9 nicht an der Abstützung beteiligt, und aus diesem Grunde sind auch unterhalb der Verlängerung 6 keine Traversen oder andere von unten nach oben gerichtete Auflager erforderlich. Da die zu beiden Seiten der Brückenplatte 1 befindlichen Abschnitte 10 bzw. ihre Vorsprünge 11 in eine schmale Aussparung 12' der die Ausnehmung 5 begrenzenden Seitenwandungen eingreifen bzw. sich auf deren Grund befindliche Widerlager 12 abstützen, erübrigen sich auch Auflager unterhalb der seitlich angeordneten Abschnitte 10.

Gemäss Fig. 4 und 6 ist zwischen der Verlängerung 6 und der Brückenplatte kein einfaches Scharnier mit Auge und Bolzen vorgesehen, die Gelenkverbindung wird vielmehr dadurch gebildet, dass das rampenseitige Ende des Mittelteiles 9 und der Abschnitte 10 bogenförmige nach unten gebogen gestaltet ist. Dieser Bogen 13 umschliesst einen an der Brückenplatte 1 gelagerten, quer zur Brücke verlaufenden Wulst 14, der die Schwenkachse bestimmt und Bestandteil eines Profils 15 ist, das auch eine dem Bogen 13 entsprechende Aufnahme 16 zum Eintauchen des Bogens 13 aufweist. Im ausgeklappten Zustand kommt die Verlängerung 6 nicht bei 17 zur Anlage an der Stirnfläche der Brückenplatte 1, sondern über das Mittelteil 9 mit einem Vorsprung 22 an dem Profil 15, das fest mit der Brpckenplatte 1 verbunden ist, vgl. Darstellung gemäss Fig. 6. In der Betrtiebsstellung der Brücke - bei nach oben geklappten Abschnitten 10 - nehmen also die Abschnitte 10 nicht an der Abstützung der Brückenplatte 1 auf der Plattform 7 teil.

Wichtig ist, dass zwischen dem Mittelteil 9 und den beiden seitlichen Abschnitten 10 keine beliebige Relativverschwenkung möglich ist. An dem Mittelteil 9 ist in einer quer zur Brücke verlaufenden Bohrung 18 ein unter der Wirkung einer Druckfeder 19 stehender Bolzen 20 verschiebbar gelagert, der in eine dem Schwenkweg der Abschnitte 10 entsprechend gekrümmte Nut 21 eingreift, jedoch in der Stellung der Abschnitte 10 gemäss Fig. 4 und 6 in eine Rastvertiefung 20' eingreift.

In dieser Rastvertiefung geschieht eine Mitnahme der Abschnitte 10, wenn das Mittelteil 9 von der senkrechten Ruhestellung aus in die Betriebsstellung geklappt wird. Treffen jedoch die Abschnitte dabei auf ein Fahrzeugteil oder werden im Anschluss daran z.B. durch Eingriff der Bedienungsperson die Abschnitte 10 nach unten geklappt, so ist dies möglich, weil der Bolzen 20 seine Rastvertiefung 20' verlassen kann und nunmehr in den übrigen Teil der Nut 21 gelangt. Die Abschnitte 10 können also nach unten klappen, jedoch ist der Schwenkweg durch die Länge der Nut 21 begrenzt ( Schwenkweg S etwa 65 - 75° ), wodurch verhindert wird, dass die Abschnitte in die Stützstellung (Fig. 3) gelangen können. Die Abschnitte 10 werden also vorher abgefangen, und ihre seitlichen Vorsprünge 11 sind ausserstande, sich auf dem Widerlager 12 abzusetzen. Demgemäss ist die Brückenplatte auch in der Lage, tief in die Ausnehmung 5 einzutauchen, ohne durch die Auflager 12 daran gehindert werden zu können.

Wird zur Beendigung des Brückenbetriebes das Mittelteil 9 nach unten geklappt, so gelangt der Bolzen 20 wieder in seine Raststellung, in der die Mitnahme zwischen den Teilen 9, 10 sichergestellt ist. Diese können dann wieder gemeinsam die etwa senkrechte Stellung einnehmen, damit die Vorsprünge 11 auf dem Widerlager 12 abgesetzt werden können. Die Mitnahme der Abschnitte 10 ist natürlich auch dann sichergestellt, wenn die Breite der Plattform 7 auch eine Auflage der Abschnitte 10 ermöglicht. Dann werden die Abschnitte 10 zusammen mit dem Mittelteil 9 ausgeklappt und vollführen auch die übrigen Bewegungen zusammen mit dem Mittelteil 9. In diesem Falle kann auch eine Behinderung durch die Vorsprünge 11 nicht eintreten, sollte die Brückenplatte 1 tief eingetaucht werden müssen. Im ausgeklappten Zustand der Abschnitte liegen die Vorsprünge 11 nämlich vor der Rampenstirnseite.

## Patentansprüche

1. Überfahrbrücke für Rampen mit einer am rampenseitigen Ende um eine waagerechte Achse (2) verschwenkbar gelagerten Brückenplatte (1) und einer am freien Ende dieser Brückenplatte (1) verschwenkbar angelenkten Verlängerung (6) zum Auflegen auf eine zu be- bzw. entladende Plattform (7), wobei sich die Verlängerung (6) in der etwa senkrecht nach unten geklappten Stellung ( Ruhestellung ) bei nicht in Betrieb befindlicher Überfahrbrücke (1) auf einem festen Widerlager (12) abstützt und ein oder beidseitig mit zumindest einem klappbaren Abschnitt (10) zur Veränderung der wirksamen Breite der Verlängerung (6) versehen und zwischen den Abschnitten (10) und dem Mittelteil (9) der Verlängerung (6) ein lösbarer Mitnehmer wirksam ist, mit dem die Abschnitte (10) von ihrer Ruhestellung aus in die Wirkstellung verschwenkbar sind, dadurch gekennzeichnet, dass sich die Brückenplatte ein- oder beidseitig über einen bzw. zwei Abschnitte (10) auf dem Widerlager (12) abstützt und dass die Abschnitte (10) und das Mittelteil (9) derart begrenzt gegeneinander verschwenkbar miteinander verbunden sind, dass die Abschnitte (10) von der etwa waagerechten Wirkstellung des Mittelteils (9) aus nur so weit nach unten schwenkbar sind, dass sie beim Verschwenken der Brückenplatte (1) nach unten an ihrem Widerlager (12) vorbeigeführt werden.

2. Brücke nach Anspruch 1, dadurch gekennzeichnet, dass an den einander zugekehrten Seiten des Mittelteils (9) und einem Abschnitt (10) am Mittelteil bzw. Abschnitt ein Mitnehmer, vorzugsweise ein federbelasteter Bolzen (20) gelagert ist, der bei fluchtendem Mittelteil und Abschnitt in eine Vertiefung (20') des anderen Elementes (9,10) eingreift (Raststellung) und in einer davon abweichenden Stellung an einem Anschlag des anderen Elementes (9,10) anliegt.

3. Brücke nach Anspruch 2, dadurch gekennzeichnet, dass der Mitnehmer bzw. Bolzen (20) in eine dem Schwenkweg des Abschnittes (10) entsprechend gekrümmt verlaufende Nut (21) eingreift, die an einem Ende vertieft ist und am anderen Ende mit ihrer Begrenzungsfläche den Anschlag bildet.

4. Brücke nach Anspruch 2, dadurch gekennzeichnet, dass der Mitnehmer bzw. Bolzen (20) ain Mittelteil (9) und die Vertiefung und Anschlag an den Abschnitten (10) angeordnet sind.

5. Brücke nach Anspruch 1, 2 und 3, dadurch gekennzeichnet, dass die Abschnitte (10) bzw. das Mittelteil (9) an ihrem rampenseitigen Ende einen Bogen (13) aufweisen, der einen an der Brückenplatte (1) angeordneten, die Schwenkachse der Verlängerung bildenden Wulst (14) umschliesst, wobei die Nut (21) einen dem Bogen (13) entsprechenden Verlauf aufweist.

6. Brücke nach Anspruch 1, dadurch gekennzeichnet, dass die Abschnitte (10) einen seitlich abstehenden Vorsprung (11) zur Abstützung auf einem Widerlager (12) aufweisen, das sich an einer Seitenwand einer zur Aufnahme der Brückenplatte (1) dienenden, in der Rampe (3) befindlichen Ausnehmung (5) befindet.

7. Brücke nach Anspruch 6, dadurch gekennzeichnet, dass das Widerlager (12) sich auf der Sohle einer Aussparung (12') in der Seitenwand befindet.

8. Brücke nach Anspruch 2, dadurch gekennzeichnet, dass der Bolzen (20) sich quer zur Überfahrbrücke erstreckt.

9. Brücke nach Anspruch 6 und 7, dadurch gekennzeichnet, dass sich die Aussparung (12') in der Ecke befindet, die die Seitenfläche der Ausnehmung (5) und die Rampenstirnseite miteinander bilden.

10. Brücke nach Anspruch 1, dadurch gekennzeichnet, dass die Abschnitte (10) um etwa 65 - 75° nach unten schwenkbar sind.

11. Brücke nach Anspruch 1, dadurch gekennzeichnet, dass in der Betriebsstellung der Brücke ( bei ausgeklapptem Mittelteil und ausgeklappten Abschnitten ) die Abstützung der Brückenplatte (1) auf einer Plattform (7) nur über das Mittelteil (9) der Verlängerung (6) erfolgt.

## Claims

1. Transfer bridge for platforms, having a bridge plate (1) mounted on the platform end so as to be pivotable about a horizontal axis (2), and an extension member (6) pivotably connected to the free end of this bridge plate (1) for support on a deck (7) to be loaded or unloaded, the extension member (6) being supported on a fixed abutment (12) in the substantially vertically downwardly pivoted position (inoperative position), when the transfer bridge (1) is not in operation, and being provided, on one or both sides, with at least one pivotable portion (10) for changing the effective width of the extension member (6), and a detachable coupling means being effective between the portions (10) and the central part (9) of the extension member (6), by means of which coupling means the portions (10) are pivotable from their inoperative position into the operative position, characterised in that the bridge plate is supported on the abutment (12) with one or both sides via one or two portions (10) respectively, and in that the portions (10) and the central part (9) are pivotably interconnected in such a limited manner relative to one another that the portions (10) are only pivotable downwardly from the substantially horizontal operative position of the central part (9) to such an extent that they are guided past their abutment (12) during the downward pivoting of the bridge plate (1).

2. Bridge according to claim 1, characterised in that a coupling means, preferably a spring-loaded pin (20), is mounted on the central part (9) or on a portion (10), on the sides facing one another of said central part or portion, which pin engages in a depression (20') of the other element (9, 10) with the central part and portion aligned (locking position) and abuts against a stop member of the other element (9, 10) in another position.

3. Bridge according to claim 2, characterised in that the coupling means or pin (20) engages in a groove (21) extending in a curved manner corresponding to the pivotal movement of the portion (10), which groove is recessed at one end and forms the stop member with its boundary face at the other end.

4. Bridge according to claim 2, characterised in that the coupling means or pin (20) is disposed on the central part (9), and the depression and stop member are disposed on the portions (10).

5. Bridge according to claims 1, 2 and 3, characterised in that the portions (10) or respectively the central part (9) have, at their platform end, a curvature (13) which surrounds a bead (14) disposed on the bridge plate (1) and forming the pivotal axis of the extension member, the groove (21) having a configuration corresponding to the curvature (13).

6. Bridge according to claim 1, characterised in that the portions (10) have a laterally protruding projection member (11) for support on an abutment (12) situated on a lateral wall of a recess (5), which serves to accommodate the bridge plate (1) and is situated in the platform (3).

7. Bridge according to claim 6, characterised in that the abutment (12) is situated on the base of an aperture (12') in the lateral wall.

8. Bridge according to claim 2, characterised in that the pin (20) extends transversely relative to the transfer bridge.

9. Bridge according to claims 6 and 7, characterised in that the aperture (12') is situated in the corner which the lateral face of the recess (5) and the platform end face form with each other.

10. Bridge according to claim 1, characterised in that the portions (10) are pivotable through approximately 65 - 75° downwardly.

11. Bridge according to claim 1, characterised in that, in the operating position of the bridge (with outwardly pivoted central part and outwardly pivoted portions), the bridge plate (1) is supported on a deck (7) only by the central part (9) of the extension member (6).

## Revendications

1. Niveleur de quai, comportant un tablier (1) monté à l'extrémité côté quai de manière à pouvoir basculer par rapport à un axe (2) horizontal et une rallonge (6) articulée, avec possibilité de basculement, à l'extrémité libre de ce tablier (1) et destinée à être posée sur une plate-forme (7) à charger ou à décharger, la rallonge (6) prenant appui, en la position rabattue à peu près verticalement vers le bas (position de repos), lorsque le niveleur (1) de quai ne se trouve pas en fonctionnement, sur un appui (12) fixe et étant munie d'un côté ou des deux côtés d'au moins une partie (10) pouvant être rabattue pour faire varier la largeur efficace de la rallonge (6) et une pièce d'entraînement amovible, par lequel les parties (10) peuvent être basculées de leur position de repos à la position active, étant active entre les parties (10) et la partie (9) médiane de la rallonge (6), caractérisé en ce que le tablier prend appui d'un côté ou des deux côtés, par l'intermédiaire d'une partie (10) ou de deux parties (10), sur l'appui (12) et en ce que les parties (10) et la partie (9) médiane sont reliées les unes aux autres, avec possibilité de basculement restreinte les unes par rapport aux autres, de telle manière que les parties (10) ne peuvent basculer, à partir de la position active à peu près horizontale de la partie (9) médiane, vers le bas que jusqu'au point où, lors du basculement du tablier (1) vers le bas, elles passent devant leur appui (12).

2. Niveleur suivant la revendication 1, caractérisé en ce qu'il est monté, sur les côtés tournés l'un vers l'autre de la partie (9) médiane et sur une partie (10) rattachée à la partie médiane ou une partie une pièce d'entraînement, de préférence une tige (20) soumise à la force d'un ressort, qui, lorsque la partie médiane et une partie sont en alignement, rentre dans un évidement (20') de l'autre élément (9, 10) (position d'encliquetage) et, en une position qui s'en écarte, s'applique à une butée de l'autre élément (9, 10).

3. Niveleur suivant la revendication 2, caractérisé en ce que la pièce d'entraînement ou la tige (20) rentre dans une rainure (21) qui s'étend de manière incurvée conformément à la course de basculement du tronçon (10), qui est évidée à une extrémité et qui forme à l'autre extrémité la butée par sa surface de délimitation.

4. Niveleur suivant la revendication 2, caractérisé en ce que la pièce d'entraînement ou la tige (20) est montée sur la partie (9) médiane et l'évidement et la butée sont ménagés sur les parties (10).

5. Niveleur suivant la revendication 1, 2 et 3, caractérisé en ce que les parties (10) et la partie (9) médiane comportent à leur extrémité côté quai un arc (13) qui entoure un renflement (14) ménagé sur le tablier (1) et formant l'axe de basculement de la rallonge, la rainure (21) ayant un tracé correspondant à l'arc (13).

6. Niveleur suivant la revendication 1, caractérisé en ce les parties (10) comportent une saillie (11) latérale pour s'appuyer sur un appui (12) qui se trouve sur une paroi latérale d'une fosse (5) servant à la réception du tablier (1) et ménagée dans le quai (3).

7. Niveleur suivant la revendication 6, caractérisé en ce que l'appui (12) se trouve au fond d'un évidement (12') ménagé dans la paroi latérale.

8. Niveleur suivant la revendication 2, caractérisé en ce que la tige (20) s'étend transversalement au niveleur de quai.

9. Niveleur suivant la revendication 6 et 7, caractérisé en ce que l'évidement (12') se trouve dans l'angle que forment les surfaces latérales de la fosse (5) et le côté frontal du quai.

10. Niveleur suivant la revendication 1, caractérisé en ce les parties (10) peuvent basculer vers le bas d'environ 65 à 75°.

11. Niveleur suivant la revendication 1, caractérisé en ce, en la position de fonctionnement du niveleur (partie médiane déployée et parties déployées), l'appui du tablier (1) sur une plate-forme ne s'effectue que par l'intermédiaire de la partie (9) médiane de la rallonge (6).
